(19)

Europäisches
Patentamt
European
Patent Office
Office européen
des brevets

(11)  EP 2 188 878 B1

(12)  **EUROPEAN PATENT SPECIFICATION**

(45) Date of publication and mention
of the grant of the patent:
**17.08.2016 Bulletin 2016/33**

(21) Application number: **08850434.5**

(22) Date of filing: **13.11.2008**

(51) Int Cl.:
*H02J 3/00* *(2006.01)*      *H02J 3/46* *(2006.01)*

(86) International application number:
**PCT/GB2008/003840**

(87) International publication number:
**WO 2009/063212 (22.05.2009 Gazette 2009/21)**

(54) **METHOD AND APPARATUS FOR PROVIDING HEAT AND POWER**

VERFAHREN UND VORRICHTUNG ZUR BEREITSTELLUNG ELEKTRISCHER ENERGIE UND
WÄRME

PROCÉDÉ ET APPAREIL POUR FOURNIR CHALEUR ET ÉLECTRICITÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **13.11.2007 GB 0722282**

(43) Date of publication of application:
**26.05.2010 Bulletin 2010/21**

(73) Proprietor: **EC Power A/S
8382 Hinnerup (DK)**

(72) Inventor: **ANDERSEN, Jens-Otto, Ravn
8000 Århus C (DK)**

(74) Representative: **Taylor, Adam David
Dehns
St Bride's House
10 Salisbury Square
London EC4Y 8JD (GB)**

(56) References cited:
**WO-A-97/38210        GB-A- 2 402 001
GB-A- 2 421 127        US-A1- 2005 062 289**

EP 2 188 878 B1

**Description**

The present invention relates to a method and an apparatus for providing heat and power to an installation.

In both domestic and industrial systems there is often more than one source of heat, or a single source that can operate in different ways. Thus, different heat production regimes exist. Such heat production regimes include producing heat using heat sources that generate only heat, such as oil, gas or electric boilers, solar panels, heat pumps and so on, as well as combined heat and power (CHP) devices that can operate in different regimes of heat and power production, such as internal combustion engines, fuel cells, CHP gas turbines and so on.

CHP units are used to supply heat and power, generally electrical power, to domestic or industrial heat and power installations, such as a home or building having an electricity supply system, space heating systems and/or water heating systems. The CHP units are used to supply some or all of the power required and at the same time supply some or all of the heat required. To smooth out the variance between power and heat demand, a heat storage means can be provided to allow heat to be produced and stored at times of high power demand, with this stored heat then being used at times of low power demand. A further heat source is usually used in conjunction with the CHP unit, such as a conventional boiler and/or a heat pump. The additional heat source is used to augment the heat output of the CHP unit, and in some circumstances it may be desirable to use it in place of the CHP unit, in particular when it is not efficient to operate the CHP unit. The installation will also usually be connected to an electricity network, which is used to supply electrical power to augment the CHP power output, or for when the CHP unit is not operating, for example when no heat is required.

The use of multiple heat production regimes leads to a need to determine how heat should be produced at any one time. Traditionally this might be decided by heat production capacity, i.e. a larger heat demand would result in the heat source with a larger heat production capacity being used, this generally being the most efficient mode of operation. In a more sophisticated known method the switch-over between heat production regimes can be based on electricity prices. For example a system may switch from boiler heat production to CHP heat production when electricity buying or selling prices rise to a set point, where it is decided that the CHP unit will be more efficient. This system is generally only used for larger CHP units such as those in industrial use or in schools, as smaller units may not be connected into the electricity exchange.

When a CHP unit is one of the heat sources it is still desirable to select the correct heat source and power source, or the correct combination of sources, in order to provide optimal energy usage. However, when a heat source which can also produce power is present, the traditional method is no longer sufficient, because if the CHP unit is used to produce heat it will also produce power, the effect of which is not taken into account by the heat production capacity of the unit. The control of such a system is further complicated by the fact that the amount of heat produced by a CHP unit is not proportionate to power production, and the ratio of electricity demand and heat demand by the supplied installation will not coincide with the ratio of electricity and heat production by the CHP unit. Calculating the most efficient way to operate the system thus becomes very difficult.

The same circumstances apply when a heat source consumes electricity, for example an electrically powered heat pump. The price of electrical power from local or remote sources can vary. It is thus similarly difficult to determine which heat source will provide the heat production regime with optimal energy usage under different demand scenarios.

GB 2402001 discloses a method in accordance with the preamble of claim 1.

Viewed from a first aspect, the present invention provides a method of operating an apparatus for providing heat and power to an installation; the apparatus being operable in at least two heat production regimes and including a connection to an external electricity network, wherein at least one heat production regime results in the production or consumption of electricity; characterised in that the method comprises: determining a relationship between heat cost and electrical power demand from the installation for heat produced by each heat production regime taking into account a value of the electrical power produced or consumed, selecting the heat production regime that has the lowest heat cost for the current electrical power demand, and using this heat production regime to provide heat to the installation; wherein taking account of the value of the electrical power produced or consumed consists of reducing the cost of heat when the heat producing regime also produces power and/or calculating the cost of heat based upon a cost of electrical power when the heat producing regime converts electrical power into heat.

The heat production regimes may comprise different heat sources, such as a system with a CHP unit and a boiler, or a boiler and a heat pump. Alternatively or in addition, the heat production regimes may comprise different operating regimes of a single heat source, such as a CHP unit which can be operated either under a regulated load to produce electrical power to meet the demand, or operated at a load higher than the demand in order to meet demand and sell surplus power to the network. The use of multiple heat sources is advantageous, because if the heat demand exceeds that produced by the selected heat source for the current power demand, then the other heat source can be used as well in order to provide the additional heat required.

The relationship between heat cost and electricity demand may be considered as a plot or profile of the heat cost as electricity demand varies. In practice, this may be embodied as a look-up table or the like in a computer system, or as a mathematical function or a calculation for each regime.

The inventors have realised that where multiple heat producing regimes exist and one of these produces or consumes electricity, then heat production can be considered to be the main constraint on the local system. This is because the heat to meet the installation heat demand is provided only by the locally situated heat producers, whereas power can be produced locally, sourced from an external power network or converted by a local heat producer into heat. Electrical power consumption and production is thus connected to an external system that can be used to redistribute any surplus or top up any deficit, whereas for heat the installation has to rely on local production.

The method therefore determines a cost of the heat produced by the different heat production regimes, and a relationship between the cost and the electrical power demand. These relationships are then used to decide which heat production regime should be used at a given electrical power demand. The invention can thus not only take into account the effects of changes in network prices of electricity, but also can take into account the variation in 'cost' of heat from a heat production regime as electrical demand varies. At any point in time, an installation can be operated based on minimum heat cost. The heat required over a heat usage cycle can therefore be provided by operating heat producing regimes at optimal periods and/or by selecting an optimal regime at any particular time when there is a heat demand. If the electrical power demand is above that which can be generated locally, then this should be topped up by electrical power from the network.

It should be noted that whilst energy optimisation of a heat and/or power production system is considered in terms of cost, i.e. price values of fuel, electricity and so on, the present invention does not simply concern economics. Instead, a price is used as the most convenient way to represent the technical characteristics of an energy production system. For example, the buying and selling price of electricity is determined by electricity distributors and suppliers based on availability of electricity, and on the efficiency of conversion of potential energy in the form of fuel into energy in the form of electrical power. The 'cost' of electricity is therefore based on technical considerations. Similarly the 'cost' of heat energy produced by a boiler depends on the conversion of potential energy in fuel into heat energy in the form of hot water for example. Thus, the 'cost' of energy simply provides a convenient and readily understandable way to compare the technical characteristics of the different means of heat production, namely the energy content and availability of the original fuels (e.g. gas at a power station, heating oil in a boiler), and the efficiencies of the energy conversion and distribution processes. The invention provides a technical means to optimise performance based on such 'cost' data.

The discussion of 'cost' also illustrates most clearly one of the advantages of optimising energy usage, which is a reduction in the use of the basic energy sources to achieve the desired end product of heat and power. This provides a financial benefit to the energy user, in terms of reduced energy bills, and also a benefit to the environment. A further advantage of the present invention is that the most effective way to operate the system can be determined automatically and can be based on real-time price data. The prior art systems involve setting switching points using data provided on installation or servicing, and so cannot follow the market conditions as effectively.

Preferably the cost is determined per unit of heat, for example a cost per kWh of heat produced. This makes the costs easier to compare.

In an example with power consumption, one of the heat producing regimes is a heat source which converts electrical power into heat and the other is a heat source which converts a fuel, such as fuel oil into heat. The determination of which heat producing regime to use is hence effectively independent of the power demand (i.e. it will be the same for any given demand) and is a comparison of the energy costs of the remote electricity production/distribution and subsequent conversion into heat with the energy costs of fuel production and conversion into heat. In this instance the heat sources could comprise an electrically powered heat pump and a boiler.

In a preferred embodiment, one of the heat producing regimes is heat provided by a combined heat and power (CHP) unit. The other heat producing regime may be heat provided by a boiler.

When a CHP unit is used which produces electrical power, the absolute cost of heat production can be reduced. The electrical power may be used to meet the demands of the installation. In this case the reduction is based on the cost of buying the same amount of electricity from the network.

In a preferred embodiment therefore, the CHP unit is operated under a regulated load to produce electrical power to meet the demand when this results in a heat cost lower than the cost of heat from the other heat producing regime. The point at which the heat cost for the CHP unit becomes the lowest heat cost is termed the eco-point.

This type of operation is particularly effective when the CHP can meet the heat requirements of the installation when running at the regulated load. If the heat demand exceeds the heat produced by the CHP unit then heat may be supplied by operating an additional heat source such as a boiler. Alternatively, the CHP unit may be run at a load in excess of the power demand from the installation, thus producing additional heat as well as surplus electrical power. The surplus electrical power produced by the CHP may be sold back to the network. In this case a further reduction in heat cost is achieved based on the selling price of electrical power. The total reduction is then partly based on energy saved by not buying electricity, and partly on value gained by selling electricity.

Thus, in another preferred embodiment the CHP unit is operated at load higher than the demand in order to meet demand and sell surplus power to the network when this results in a heat cost lower than the cost of heat from the other heat producing regime. The point at which the heat cost for the CHP unit including the effect of power sales becomes the lowest is termed the sales eco-point.

With a CHP unit, the most efficient power production is generally achieved at the maximum rated power output, i.e. at full load. Therefore, when the possibility exists to sell power back to a network, the CHP unit operating regime preferably consists of operating the CHP unit at full load, with all power in excess of the demand being sold to the network. As will be apparent from the above discussion, this mode of operation is particularly attractive when the heat demand of the installation exceeds the heat produced by the CHP unit.

The cheapest operating regime for a CHP unit may vary at different power demands. Thus, in a preferred embodiment, two heat producing regimes consist of: (i) operating a CHP unit under a regulated load to produce electrical power to meet the demand, and (ii) operating the CHP unit at load higher than the demand in order to meet demand and sell surplus power to the network. Preferably operating regime (ii) consists of operating the CHP unit at full load as discussed above.

The cheapest heat cost of these two heat producing regimes may be selected in accordance with the invention. However, preferably the selection of the operating regime also includes a consideration of the heat demand of the installation. If the heat demand of the installation exceeds the heat produced by the CHP unit at a regulated load, then the method may comprise selecting operating regime (ii) and not considering operating regime (i). If more heat is required than is produced by the CHP unit at full load, then an additional heat source may be used, such as a boiler or a heat pump.

Of course, once sufficient heat has been produced to meet the demands of the installation, i.e. for example when stored heat in the installation reaches a set level, then it is no longer necessary to produce excess heat. Thus, the consideration of the heat demand of the installation may include selecting (i) and not considering (ii) when the heat demand of the installation can be met by the CHP unit at a regulated load.

The above two CHP unit operating regimes may form the only heat production regimes available, but in a preferred embodiment the method includes a further heat production regime in the form of a separate heat source. The separate heat source may be a boiler. In this case the cheapest heat cost out of the boiler and the two CHP operating regimes is selected for the particular power demand. Alternatively the separate heat source may be a heat pump. The heat pump heat cost may be considered in the same way as the boiler heat cost, but preferably the heat pump interacts with the CHP unit as discussed below.

Both a boiler and a heat pump may be present. In one preferred embodiment, there is no CHP unit and the heat sources comprise a boiler and a heat pump.

The use of a further heat source in combination with the different operating regimes is advantageous, as it allows for additional heat to be produced over and above the heat produced by the CHP unit, allowing demands which exceed the CHP heat output to be met.

When heat provided by an electrically powered heat pump and a CHP unit (with a single operating regime or multiple operating regimes) form the heat production regimes, then the electrical power from the CHP unit may be used to power the heat pump. This results in a further reduction in heat cost, as a saving is made by not having to buy power from the network to supply the heat pump. As a heat pump has an effective efficiency of more than 100% the reductions can be significant. The method may include determining the net heat cost with CHP and heat pump operating together by calculating a value of electricity 'sold' from the CHP unit to the heat pump based on the heat produced by the heat pump and the cost of producing an equivalent amount of heat using the boiler.

It will be apparent that heat pump operation may only be desirable when it is necessary to produce additional heat. Thus, as above the selection of the operating regime preferably also includes a consideration of the heat demand of the installation. In the alternative situation where the CHP unit cannot meet heat demands at full load, then a further heat source is required. The further heat source could be the boiler or it could be the heat pump. In a preferred embodiment the method includes determining which additional heat source to use by a comparison of the cost of the heat pump and the boiler. The net heat cost of simultaneous CHP unit and heat pump operation as discussed above may also be considered. Viewed from a second aspect, the present invention provides an apparatus for providing heat and electrical power to an installation, the apparatus comprising: one or more heat sources operable in at least two heat production regimes, wherein at least one heat production regime produces or consumes electricity; a connection to an external electricity network; and a control device; wherein the control device is arranged to: determine a cost of heat produced by the heat production regimes taking into account a value of the electrical power produced or consumed; to select, for a given electrical power demand from the heat production regime to provide heat to the installation; wherein taking account of the value of the electrical power produced or consumed consists of reducing the cost of heat when the heat producing regime also produces power and/or calculating the cost of heat based upon a cost of electrical power when the heat producing regime converts electrical power into heat.

The apparatus may incorporate features equivalent to the preferred features of the first aspect of the invention as discussed above.

In a preferred embodiment, the control device is arranged to receive data relating to cost of energy for use in determining costs of heat. For example, the control device may receive one or more of: fuel costs of fuel for the heat sources, efficiencies of heat sources, maintenance/service costs, price for buying electrical power, price for selling electrical power, and other variables for characterising heat production regimes, such as the variables discussed below in relation to the preferred embodiments. The data may be transmitted via communications network such as a telephone or internet network. The control device may be provided with a calculator or computer device for calculating the cost of heat using equations such as those discussed below in relation to the preferred embodiments.

In the discussion above, and in the preferred embodiments described below, the heat sources are devices that produce heat to enable installations to maintain an elevated temperature. However, it should be noted that in the context of the present invention a heat producing regime could extend to the removal of heat from an installation, i.e. in effect a negative heat production. For example, a heat production regime could be a 'negative heat' source such as an air conditioning unit, or a mode of operation of a heat pump in which heat is removed from an installation. The same considerations and calculations of'cost' to optimise energy usage can be applied. Thus, an air conditioner or heat pump might use a certain amount of electricity to remove a unit of heat from an installation, and by selecting an appropriate "heat producing regime", which produces negative heat, the desired reduction of heat can be achieved in an efficient manner, just as the desired increase in heat is achieved by selecting one of a boiler and a heat pump for example..

Preferred embodiments of the present invention will now be described with reference to the accompanying drawings in which:

Figure 1 is a graph showing the results of a calculation of heat price for a CHP and boiler system under heat demands that can be satisfied by the CHP unit and including the effect of selling power back to the network,
Figure 2 is a graph for the same system of Figure 1, showing the effects of a reduction in the power selling price,
Figure 3 is a plot of the savings obtained by using a CHP unit when heat consumption is higher than the maximum heat produced by the CHP unit,
Figure 4 is a plot similar to Figure 3, with the power selling price reduced,
Figure 5 shows the savings of Figure 4 converted into a graph comparing CHP unit heat price and boiler heat price,
Figure 6 shows a graph of heat price for a system which also includes a heat pump,
Figure 7 is similar to Figure 6, but has a boiler with a lower heat price and the diesel price is reduced, and
Figure 8 shows a graph as for Figure 7, but with in the T1 cold mode of operation with the heat consumption higher than the maximum CHP heat production.

The invention utilises the fact that all types of CHP units or systems can be described by parameters obtained from a set of equations using the following six measurable variables:

Variables for fuel calculations:

Idle consumption (kW)         (TF)
Basic indicated efficiency     (BI)
Factor indicated efficiency    (FI)

Variables for heat calculations:

Heat efficiency running idle    (VT)
Factor heat indicated            (FVI)
Loss                                   (kW)

The indicated efficiency (IV) results from a certain power output (Pe), which in normal regulated operation is equivalent to the power demand from the installation.

$$IV = BI - (Pe \times FI)$$

Fuel consumption (Pi) in units of kW can then be calculated as:

$$Pi = TF + (Pe / IV)$$

The heat output (Qv) of the CHP unit is a function of fuel consumption and power output:

$$Qv = VT \times Pi - (Pe \times IV \times FVI) - Loss$$

This results in the "heat factor" (VF) of Qv / Pe, i.e. the ratio of the heat output to the power demand. As noted above, in a CHP unit the heat output is not simply proportional to the power supplied.

As an example, the equations above are worked through for a 9 kW diesel engine. For such an engine the values of the variables are:

TF = 7 kW; BI = 0,59; FI = 0,017;
VT = 0,78; FVI = 1,3; Loss = 0,5 kW

Operating with a power output meeting a demand of 4 kW gives the following results:

$$\text{Indicated efficiency } IV = 0,59 - (4 \times 0,017) = 0,522$$

$$\text{Fuel consumption } Pi = 7 + (4 / 0,522) = 14,66 \text{ kW}$$

$$\text{Heat output } Qv = 0,78 \times 14,66 - (4 \times 0,522 \times 1,3) - 0,5 = 8,22 \text{ kW}$$

$$\text{Heat factor } VF = 8,22 / 4 = 2,06$$

These functions can be used to create a "heat factor scale" which can be used to determine at what point optimal energy costs are achieved by operating the CHP unit. The point above which this occurs is termed the "eco-point", and the calculations to obtain it are discussed further below. Table 1 shows heat factors calculated for the 9 kW CHP unit is set out below, with values at 1 kW intervals. A "fuel factor scale" calculated in a similar fashion as the ratio of fuel consumption to power demand, (i.e. Pi / Pe) is also included.

Table 1

| Power demand (kW) | 1 | 2 | 3 | 4 | 5 | 6 | 7 | 8 | 9 |
|---|---|---|---|---|---|---|---|---|---|
| Heat output | 5,55 | 6,32 | 7,20 | 8,22 | 9,40 | 10,7 | 12,3 | 14.0 | 15,9 |
| → "Heat factor" | 5,55 | 3,16 | 2,40 | 2,06 | 1,88 | 1,79 | 1,75 | 1,75 | 1,77 |
| Fuel consumption | 8,75 | 10,6 | 12,6 | 14,7 | 16,9 | 19,3 | 21,9 | 24,6 | 27,6 |
| → "Fuel factor" | 8,75 | 5,30 | 4,19 | 3,67 | 3,38 | 3,22 | 3,12 | 3,08 | 3,07 |

Thus, based on the six variables it is possible to create a heat factor scale with infinite graduation for any CHP system. At the same time it is possible to establish a very exact calculation of the fuel used in each cycle, as the consumption per cycle is equivalent to (number of Wh per cycle) × "fuel factor".

This procedure leads directly to an economic/price controlled operation, as a value for the heat price can be determined which incorporates fuel usage as well as other costs, such as service/maintenance costs. A system with a CHP unit and a boiler, both capable of supplying heat, can therefore be easily controlled for optimal energy costs. The following example illustrates how the heat price is determined, using the above discussed 9 kW engine in conjunction with sufficient back-up from a boiler.

In this example, the following prices (in Danish Kroner) are used to assess the 'cost' of heat production:

Power: 1,50 DKK/kWh
Diesel: 6 DKK/1 = 0,6 DKK/kWh
Heating oil: 6 DKK/1 = 0,6 DKK/kWh

The service and wear costs for the 9 kW CHP engine is taken as 2 DKK/hour of operation.

To determine the fuel costs and heat prices for the CHP unit the following calculations are used, the fuel price being the price of diesel in this instance:

- Fuel consumption / kWh heat= Fuel consumption Pi / heat output Qv
- Fuel cost / kWh heat = (fuel consumption / kWh heat) $\times$ fuel price (per kWh)
- Service cost / kWh heat = (service cost / h) / heat output Qv (kW)
- Total cost / kWh heat = (fuel cost / kWh heat) + (service cost / kWh heat)
- Power production / kWh heat = 1 / heat factor VF
- Power savings / kWh heat = Power production / kWh heat $\times$ Power purchase price
- Cost / kWh heat = (total cost / kWh heat) - (power savings / kWh heat)

It will be appreciated that through the use of these calculations a heat price for the CHP unit is established which takes into account the value of the electrical power produced by the CHP unit. This allows a direct comparison of the use of the CHP unit against the use of other heat sources, in particular a boiler as in this case. The equivalent boiler heat costs can be calculated in a conventional manner based on the efficiency of the boiler. A typical boiler efficiency of 85% is used for this example.

- Cost / kWh heat from boiler = (price heating oil) / (efficiency boiler)

The savings offered by use of the CHP unit instead of the boiler in order to meet heat demand can then be determined as follows.

- Saving / kWh heat = (cost / kWh heat, normal) - (cost / kWh heat from boiler)

The results of these calculations are shown in Table 2 below, and these results can be used to establish an eco-point for this system.

Table 2

| Power demand (kW) | 1 | 2 | 3 | 4 | 5 | 6 | 7 | 8 | 9 |
|---|---|---|---|---|---|---|---|---|---|
| Heat output | 5,55 | 6,32 | 7,20 | 8,22 | 9,40 | 10,7 | 12,3 | 14.0 | 15,9 |
| → "Heat factor" | 5,55 | 3,16 | 2,40 | 2,06 | 1,88 | 1,79 | 1,75 | 1,75 | 1,77 |
| Fuel consumption | 8,75 | 10,6 | 12,6 | 14,7 | 16,9 | 19,3 | 21,9 | 24,6 | 27,6 |
| → "Fuel factor" | 8,75 | 5,30 | 4,19 | 3,67 | 3,38 | 3,22 | 3,12 | 3,08 | 3,07 |
| Fuel consump./ kWh heat | 1,56 | 1,68 | 1,75 | 1,78 | 1,80 | 1,80 | 1,78 | 1,76 | 1,73 |
| Fuel cost / kWh heat | 0,94 | 1,01 | 1,05 | 1,07 | 1,08 | 1,08 | 1,07 | 1,06 | 1,04 |
| Service cost / kWh heat | 0,36 | 0,32 | 0,28 | 0,24 | 0,21 | 0,19 | 0,16 | 0,14 | 0,13 |
| Total cost / kWh heat | 1,30 | 1,32 | 1,33 | 1,31 | 1,29 | 1,26 | 1,23 | 1,20 | 1,17 |
| Power prod. / kWh heat | 0,18 | 0,32 | 0,42 | 0,49 | 0,53 | 0,56 | 0,57 | 0,57 | 0,57 |
| Power saving / kWh heat | 0,27 | 0,48 | 0,63 | 0,73 | 0,80 | 0,84 | 0,86 | 0,86 | 0,85 |
| Net cost/ kWh heat | 1,03 | 0,84 | 0,70 | 0,58 | 0,49 | 0,43 | 0,37 | 0,34 | 0,32 |
| Cost / kWh heat from boiler | 0,71 | 0,71 | 0,71 | 0,71 | 0,71 | 0,71 | 0,71 | 0,71 | 0,71 |
| Saving/ kWh heat | -0,33 | -0,14 | 0,01 | 0,12 | 0,21 | 0,28 | 0,33 | 0,36 | 0,39 |

Using this heat price calculation, the eco-point can be identified as being at a power output of just less than 3 kW, this being the point at which the savings become positive. For optimal energy costs in this system, the CHP unit should be operated to provide heat and power when the power demand exceeds the eco-point, and below the eco-point the boiler should be used to provide heat, with power supplied from the network.

In many systems it is also possible to sell power produced by the CHP unit back to the electricity network. This introduces the possibility of running the CHP unit to produce more power than is required by the installation, using the heat to meet heat demand and selling any excess power. In the present technical/economic situation power sale always means running the CHP unit at full load, as power prices are independent of load and the cost per kWh of power production by the CHP unit is lowest when the CHP unit is at full load.

There are two fundamentally different situations to consider. In the simplest case, the heat demand can be covered by CHP in a normal consumption regulated operation. For instance, in the example of Table 2 this would require heat demand when power output was 1 kW to be less than 5,6 kW. This mode of operation is known as "T1 warm" and is considered first below. In an alternative scenario, the heat demand cannot be covered by the CHP in a normal consumption regulated operation. This is known as "T1 cold".

In both cases it is assumed that the power consumption of the installation is lower than the max output of the CHP unit. If the power consumption is higher than this then there is of course no need to consider the possibility of selling power to the network, as there is no surplus to sell.

In order to incorporate the effects of running the CHP unit at full load and selling the power, the following additional figures and calculations are used:

- Total cost / kWh heat at full load (i.e. in this case cost / kWh heat at the maximum 9 kW load)
- Power production / kWh heat at full load
- 

$$\text{Power savings / kWh heat at full load} = (\text{power purchase price}) \times (\text{power demand Pe}) \times (\text{power production / kWh heat at full load}) / (\text{power output at full load})$$

- 

$$\text{Power sales / kWh heat at full load} = (\text{power sales price}) \times [(\text{max. output power}) - (\text{power demand Pe})] \times (\text{power production / kWh heat at full load}) / (\text{power output at full load})$$

- 

$$\text{Cost / kWh heat, full load} = (\text{total cost / kWh heat at full load}) - (\text{power savings / kWh heat at full load}) - (\text{power sales / kWh heat at full load})$$

- 

$$\text{Saving / kWh heat at full load} = (\text{cost / kWh heat at full load}) - (\text{cost / kWh heat from boiler})$$

The Figures in Table 2 above show how the 9 kW CHP unit is able to cover the heat consumption in a normal consumption regulated operation. This mode of operation is known as "T1 warm" and is indicated in the table as normal load. Table 3 below include corresponding figures, but because the CHP unit now has the opportunity to sell power at 0,90 DKK/kWh a parallel set of figures and calculations is added for a unit running at full load as set out above. Power production per kWh heat at full load is divided into one part for covering own consumption and one part for sale and then multiplied by the corresponding prices.

Table 3

| Power demand (kW) | 1 | 2 | 3 | 4 | 5 | 6 | 7 | 8 | 9 |
|---|---|---|---|---|---|---|---|---|---|
| Heat output | 5,55 | 6,32 | 7,20 | 8,22 | 9,40 | 10,7 | 12,3 | 14.0 | 15,9 |
| → "Heat factor" | 5,55 | 3,16 | 2,40 | 2,06 | 1,88 | 1,79 | 1,75 | 1,75 | 1,77 |
| Fuel consumption | 8,75 | 10,6 | 12,6 | 14,7 | 16,9 | 19,3 | 21,9 | 24,6 | 27,6 |

(continued)

| Power demand (kW) | 1 | 2 | 3 | 4 | 5 | 6 | 7 | 8 | 9 |
|---|---|---|---|---|---|---|---|---|---|
| → "Fuel factor" | 8,75 | 5,30 | 4,19 | 3,67 | 3,38 | 3,22 | 3,12 | 3,08 | 3,07 |
| Fuel consump./ kWh heat | 1,56 | 1,68 | 1,75 | 1,78 | 1,80 | 1,80 | 1,78 | 1,76 | 1,73 |
| Fuel cost / kWh heat | 0,94 | 1,01 | 1,05 | 1,07 | 1,08 | 1,08 | 1,07 | 1,06 | 1,04 |
| Service cost / kWh heat | 0,36 | 0,32 | 0,28 | 0,24 | 0,21 | 0,19 | 0,16 | 0,14 | 0,13 |
| Total cost / kWh heat | 1,30 | 1,32 | 1,33 | 1,31 | 1,29 | 1,26 | 1,23 | 1,20 | 1,17 |
| Full load total cost/kWh heat | 1,17 | 1,17 | 1,17 | 1,17 | 1,17 | 1,17 | 1,17 | 1,17 | 1,17 |
| Power prod. / kWh heat | 0,18 | 0,32 | 0,42 | 0,49 | 0,53 | 0,56 | 0,57 | 0,57 | 0,57 |
| Full load power prod./kWh heat | 0,57 | 0,57 | 0,57 | 0,57 | 0,57 | 0,57 | 0,57 | 0,57 | 0,57 |
| Power saving / kWh heat | 0,27 | 0,48 | 0,63 | 0,73 | 0,80 | 0,84 | 0,86 | 0,86 | 0,85 |
| Full load power saving/kWh ht | 0,094 | 0,189 | 0,283 | 0,377 | 0,471 | 0,566 | 0,660 | 0,754 | 0,848 |
| Full load power sales/kWh heat | 0,453 | 0,396 | 0,339 | 0,283 | 0,226 | 0,170 | 0,113 | 0,057 | 0,0 |
| Normal load cost / kWh heat | 1,03 | 0,85 | 0,70 | 0,58 | 0,49 | 0,43 | 0,37 | 0,34 | 0,32 |
| Full load cost / kWh heat | 0,62 | 0,58 | 0,54 | 0,51 | 0,47 | 0,43 | 0,39 | 0.36 | 0.32 |
| Cost / kWh heat from boiler | 0,71 | 0,71 | 0,71 | 0,71 | 0,71 | 0,71 | 0,71 | 0,71 | 0,71 |
| Normal load saving/ kWh heat | -0,33 | -0,14 | 0,01 | 0,12 | 0,21 | 0,28 | 0,33 | 0,36 | 0,39 |
| Full load saving / kWh heat | 0,09 | 0,12 | 0,16 | 0,20 | 0,24 | 0,27 | 0,31 | 0,35 | 0,39 |

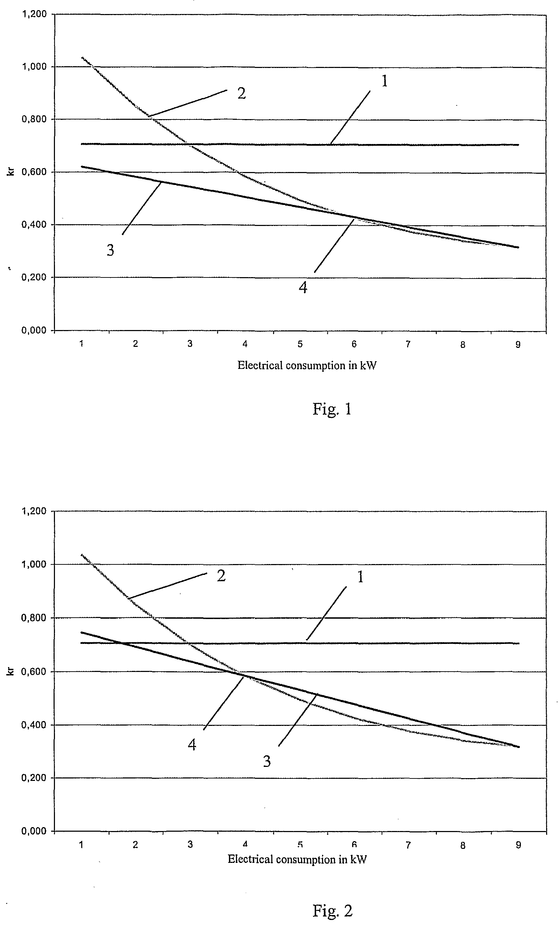

With this set up, it is clear that the optimal energy costs will be achieved by running the CHP unit at full load and selling the excess power at all power demands from zero up until just below a power output of 6 kW, at which point it becomes more effective to switch to normal loads, i.e. not selling excess power to the network. This can be seen clearly in Figure 1, which shows a plot of boiler cost 1, CHP cost at normal loads 2 and CHP full load cost 3. The cost of providing heat by running the CHP at full load and selling excess power is cheapest (i.e. the lowest curve) until about 5,7 kW, at which point it becomes more effective to run the CHP unit at the actual load required by the installation.

Another scenario, still operating as T1 warm, is illustrated in Figure 2, which shows the effect of a power sales price of 0,65 DKK / kWh instead of 0,9 DKK / kWh. This price change affects the costs of running at full load, as the advantage provided by selling surplus power back is reduced.

As shown in Figure 2, with this reduction in selling price using the boiler for heat (with power bought from the grid) becomes cheapest for power outputs up to about 1,2 kW, the CHP at full load is cheapest from about 1,2 kW until about 4 kW, and the CHP running at the actual load is cheapest above 4 kW.

Thus, the unit selects the operation mode which results in the lowest heat price. Note that Figures 1 and 2 also illustrate the situation when no sales are possible. If the curve 3 for the cost of CHP at full load is disregarded, then the crossing point of the curve 2 for the cost of the CHP at normal load with the boiler cost shows the eco-point, i.e. the point at which a saving is achievable by operating the CHP unit.

When selling power back to the network is possible, a new eco-point is found, which is termed the sales eco-point. The sales eco-point occurs when the CHP full load curve 3 crosses the boiler price line 1.

The eco-point determines if the CHP unit or the boiler should be operated. In a situation where power sales are possible, when power demand is above the sales eco-point the CHP unit determines if it should operate at full load or at the installation demand load. This determination depends on the crossing point 4 of the full load and normal load curves, as shown in Figures 1 and 2.

We now consider T1 cold, i.e. when the heat demand cannot be covered by the normal operation of the CHP unit. This requires an additional calculation, as the heat demand is effectively "unlimited" and the efficiency of the CHP unit compared to the boiler is the limiting factor on whether or not it is operated.

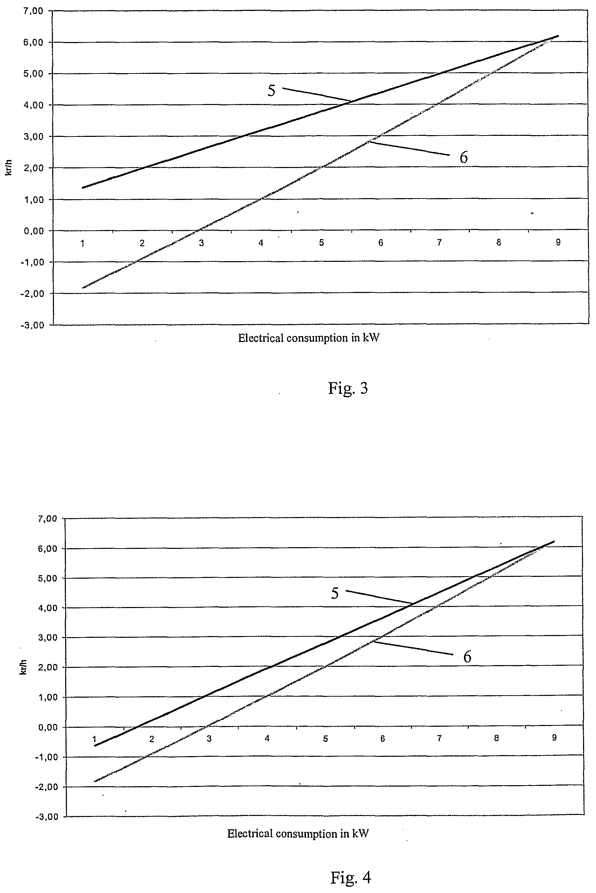

All of the heat produced by the CHP unit, whether at normal load or full load, is taken up by the "unlimited" heat demand. The absolute value of the amount saved should therefore be considered instead of the heat price per kWh of heat. This absolute saving is the saving / kWh heat multiplied by the heat output, or full load heat output as appropriate. Table 4 includes sets of figures which indicate the savings achieved in this instance, and the values of Table 4 are plotted in Figure 3, showing a first line 5 for savings at full load, and a second line 6 for savings at normal regulated loading.

Table 4

| Power demand (kW) | 1 | 2 | 3 | 4 | 5 | 6 | 7 | 8 | 9 |
|---|---|---|---|---|---|---|---|---|---|
| Heat output | 5,55 | 6,32 | 7,20 | 8,22 | 9,40 | 10,7 | 12,3 | 14.0 | 15,9 |
| → "Heat factor" | 5,55 | 3,16 | 2,40 | 2,06 | 1,88 | 1,79 | 1,75 | 1,75 | 1,77 |
| Fuel consumption | 8,75 | 10,6 | 12,6 | 14,7 | 16,9 | 19,3 | 21,9 | 24,6 | 27,6 |
| → "Fuel factor" | 8,75 | 5,30 | 4,19 | 3,67 | 3,38 | 3,22 | 3,12 | 3,08 | 3,07 |
| Fuel consump./ kWh heat | 1,56 | 1,68 | 1,75 | 1,78 | 1,80 | 1,80 | 1,78 | 1,76 | 1,73 |
| Fuel cost / kWh heat | 0,94 | 1,01 | 1,05 | 1,07 | 1,08 | 1,08 | 1,07 | 1,06 | 1,04 |
| Service cost / kWh heat | 0,36 | 0,32 | 0,28 | 0,24 | 0,21 | 0,19 | 0,16 | 0,14 | 0,13 |
| Total cost / kWh heat | 1,30 | 1,32 | 1,33 | 1,31 | 1,29 | 1,26 | 1,23 | 1,20 | 1,17 |
| Full load total cost/kWh heat | 1,17 | 1,17 | 1,17 | 1,17 | 1,17 | 1,17 | 1,17 | 1,17 | 1,17 |
| Power prod. / kWh heat | 0,18 | 0,32 | 0,42 | 0,49 | 0,53 | 0,56 | 0,57 | 0,57 | 0,57 |
| Full load power prod./kWh heat | 0,57 | 0,57 | 0,57 | 0,57 | 0,57 | 0,57 | 0,57 | 0,57 | 0,57 |
| Power saving / kWh heat | 0,27 | 0,48 | 0,63 | 0,73 | 0,80 | 0,84 | 0,86 | 0,86 | 0,85 |
| Full load power saving/kWh ht | 0,094 | 0,189 | 0,283 | 0,377 | 0,471 | 0,566 | 0,660 | 0,754 | 0,848 |
| Full load power sales/kWh heat | 0,453 | 0,396 | 0,339 | 0,283 | 0,226 | 0,170 | 0,113 | 0,057 | 0,0 |
| Normal load cost / kWh heat | 1,03 | 0,85 | 0,70 | 0,58 | 0,49 | 0,43 | 0,37 | 0,34 | 0,32 |
| Full load cost / kWh heat | 0,62 | 0,58 | 0,54 | 0,51 | 0,47 | 0,43 | 0,39 | 0.36 | 0.32 |
| Cost / kWh heat from boiler | 0,71 | 0,71 | 0,71 | 0,71 | 0,71 | 0,71 | 0,71 | 0,71 | 0,71 |
| Normal load saving/ kWh heat | -0,33 | -0,14 | 0,01 | 0,12 | 0,21 | 0,28 | 0,33 | 0,36 | 0,39 |
| Normal load absolute saving | -1,83 | -0,90 | 0,04 | 1,01 | 1,99 | 3,01 | 4,04 | 5,10 | 6,17 |
| Full load saving / kWh heat | 0,09 | 0,12 | 0,16 | 0,20 | 0,24 | 0,27 | 0,31 | 0,35 | 0,39 |
| Full load absolute saving | 1,37 | 1,97 | 2,57 | 3,17 | 3,77 | 4,37 | 4,97 | 5,57 | 6,17 |

The largest saving over zero is selected. If the saving is below zero then this indicates that the boiler is more efficient. As can be seen from Figure 3, with the power prices and costs used in this example, the sales eco-point is below 0 kW, and the normal eco-point is at about 3 kW. Thus, when it is possible to sell power and the heat demand exceeds heat output during normal regulated operation the CHP unit should always be operated (at full load). When power is not being sold back to the network, the boiler should be operated up until about 3 kW, and thereafter the CHP unit will be more efficient.

Figure 4 shows a similar set of data when the selling price is reduced to 0,65 DKK / /kWh. Thus, Figure 4 shows savings values for T1 cold operation corresponding to the costs for T1 warm operation shown in the graph of Figure 2.

The savings plots of Figures 3 and 4 can be converted into a form directly comparable to the cost graphs of Figure 1 and 2 by converting the savings figure into a cost figure for heat. The costs for full load are the same as that shown in the corresponding T1 warm graphs, but the costs for normal regulated loads need to be adjusted in order to take account of the fact that due to the elevated heat demand, the boiler is required to supply heat to bring the heat output up to the maximum heat output of the CHP unit. The heat demand could of course be greater than this, but for comparison purposes there is no need to take into account any additional heat demand, because it can only be supplied by the boiler in this scenario. The calculation of the adjusted normal load cost can be carried out as follows:

- Normal load cost / kWh heat under T1 cold operation = [(heat output Pe) × (normal load cost / kWh heat)] + [(heat output at full load - heat output Pe) × (cost /kWh heat from boiler)]

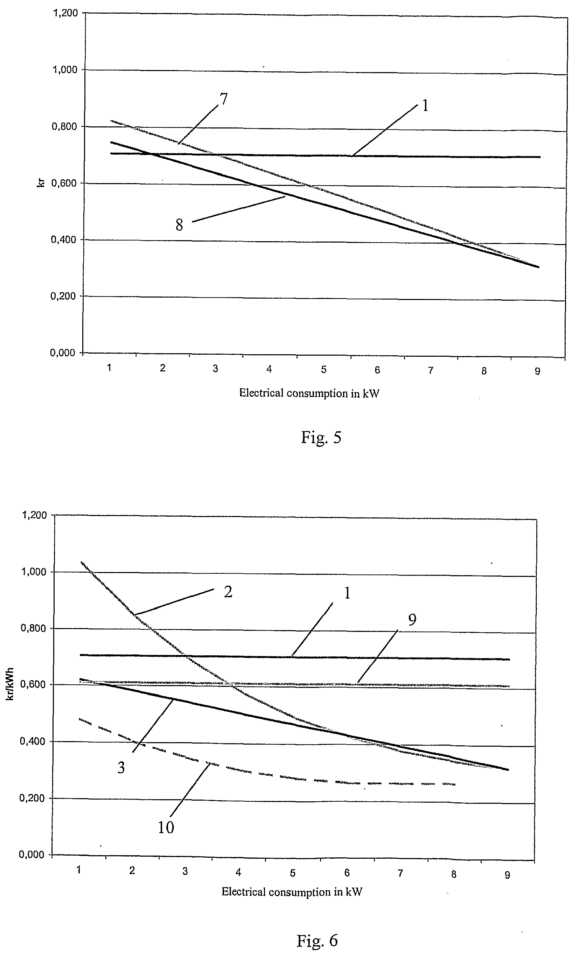

The results of such a conversion are shown in Figure 5 for the savings of Figure 4, i.e. at a selling price of 0,65 DKK / kWh. As follows from the savings, the cost line 7 for normal load operation is higher than the cost line 8 for full load operation. The line 1 for the cost of heat produced by the boiler is also included. The sales and normal eco-points for T1 cold operation can clearly be seen.

A further possible addition to the system is a heat pump, which can use electrical power from the CHP unit or from the network in order to provide heat. The heat price for heat from the heat pump will vary depending upon the power available from the CHP unit, and the price for power from the network. It can be calculated using the power price, the efficiency of the heat pump, and the service/operating costs.

The calculation of cost per kW of heat when the heat pump is powered by power from the network is straightforward, being the cost of the power consumed and maintenance, divided by the amount of heat produced, i.e.

- Heat pump heat cost (using network power) = [(heat pump power consumption × power purchase price) + (heat pump service cost)] / (heat pump heat output)

An example heat pump might use 3 kW of electrical power at an efficiency of 3 to provide 9 kW of heat. Using a network power price of 1,5 DKK/kWh and a service cost of 1 DKK/hour of operation for the heat pump, the cost per kW of heat is therefore [(3 × 1,5) + 1] / 9 = 0,611. As with the boiler there is of course no variation in heat pump heat price when the power demand varies, but the heat output and efficiency of the heat pump can vary with outside temperature, and this should be taken into account.

An example costs scenario including a heat pump is shown in Figure 6. In addition to the cost lines already mentioned above, there is a heat pump cost line 9, and a net cost line 10. An example heat pump cost of 0,61 DKK / kWh is used, calculated from a heating oil cost of 6 DKK/litre. This is lower than the boiler cost of 0,71 DKK / kWh, which has the effect that the heat pump would be used instead of the boiler. The heat pump costs therefore determine the sales and normal eco-points, which are approximately 1 kWh and 4 kWh respectively.

Thus, under T1 warm (low heat demand) operation the eco-point is found using the cheapest of the boiler or heat pump.

The above applies when the CHP unit can satisfy the heat demand of the installation. In some circumstances it may be desirable to produce heat using the CHP unit and the heat pump acting together, i.e. when the heat pump is powered entirely or in part by power produced by the CHP unit. Generally this would be when a large heat demand occurs, i.e. in T1 cold operation as discussed below. The cost of heat when doing this is shown by the net cost line 10 in Figure 6. When this mode of operation is used a very low heat cost can be achieved. The calculation to assess the net cost proceeds as follows.

First, a comparative value for electricity consumed by using the heat pump can be calculated by consideration of the cost of operating the boiler at the same heat load. This represents the value of electricity 'sold' to the heat pump by the CHP unit, and allows a comparison with the network electricity selling price. This value can then be adjusted based on the amount of power supplied by the CHP unit to the heat pump and the amount of power purchased to run the heat pump. As the heat pump electricity value will generally be more than the purchase price, the adjusted heat pump electricity value will be reduced when power is purchased from the network, as the higher selling value for the CHP power cannot be realised. The CHP power production and total cost are assessed as in tables 2 to 4 above, but using the CHP operating load as the demand, i.e. taking into account that the CHP is running at a load equivalent to the demand plus the power provided to the heat pump. The effective savings achieved by 'selling' CHP power to meet demand (i.e. by avoiding the need to buy power at the purchase price) and by 'selling' CHP power to the heat pump (i.e. by avoiding the need to buy heat at the boiler heat price) can then be assessed, and the net cost of heat produced by running the CHP unit and the heat pump, with CHP power used to power the heat pump, can be determined.

The calculations used are as follows:

- Heat pump electricity value = [(heat pump heat output) × (boiler cost / kWh heat) - (heat pump service cost)] / (heat pump efficiency)

- CHP output used for heat pump = (max. CHP output power) - (power demand), up to a maximum of the heat power consumption (3 kW in this example)

- Power purchased for heat pump = (heat pump power consumption) - (CHP output used for heat pump)

  - Adjusted heat pump power value = [(heat pump power consumption) × (heat pump electricity value) - (power purchased for heat pump) × (power purchase price)] / (CHP output used for heat pump)

- CHP operating load = (power demand) + (CHP output used for heat pump)

- CHP power production / kWh heat = as for power production / kWh heat in tables 2 - 4, with demand at the at CHP operating load

- CHP total cost / kWh heat = as for total cost / kWh heat in tables 2 - 4, with demand at the CHP operating load

- Savings / kWh heat, with heat pump operation = [(power demand) × (power purchase price) + (CHP output used for heat pump) × (adjusted heat pump electricity value)] × (CHP power production / kWh heat) / (CHP operating load)

- CHP net cost / kWh heat, with heat pump = (CHP total cost / kWh heat) - (savings / kWh heat, with heat pump)

The results of the heat pump calculations with a power purchase price of 1,5 DKK/kWh, a power selling price of 0,9 DKK/kWh, a CHP fuel price of 5 DKK/kWh and a fuel oil price of 5 DKK/kWh are shown in Table 5. Note that the fuel oil price equates to a boiler cost / kWh heat of 0,59 using calculations as used above for Tables 2 to 4.

Table 5

| Power demand (kW) | 1 | 2 | 3 | 4 | 5 | 6 | 7 | 8 | 9 |
|---|---|---|---|---|---|---|---|---|---|
| Power consumption (kW) | 3 | 3 | 3 | 3 | 3 | 3 | 3 | 3 | 3 |
| Efficiency of heat pump | 3 | 3 | 3 | 3 | 3 | 3 | 3 | 3 | 3 |
| Heat output (kW) | 9 | 9 | 9 | 9 | 9 | 9 | 9 | 9 | 9 |
| Service cost / h | 1 | 1 | 1 | 1 | 1 | 1 | 1 | 1 | 1 |
| Heat pump heat cost / kWh | 0,61 | 0,61 | 0,61 | 0,61 | 0,61 | 0,61 | 0,61 | 0,61 | 0,61 |
| HP input electricity value / kWh | 1,43 | 1,43 | 1,43 | 1,43 | 1,43 | 1,43 | 1,43 | 1,43 | 1,43 |

(continued)

| Power demand (kW) | 1 | 2 | 3 | 4 | 5 | 6 | 7 | 8 | 9 |
|---|---|---|---|---|---|---|---|---|---|
| Power purchase price /kWh | 1,5 | 1,5 | 1,5 | 1,5 | 1,5 | 1,5 | 1,5 | 1,5 | 1,5 |
| Power sales price /kWh | 0,9 | 0,9 | 0,9 | 0,9 | 0,9 | 0,9 | 0,9 | 0,9 | 0,9 |
| CHP output used for HP (kW) | 3 | 3 | 3 | 3 | 3 | 3 | 2 | 1 | 0 |
| Power purchased for HP (kW) | 0 | 0 | 0 | 0 | 0 | 0 | 1 | 2 | 3 |
| Adjusted HP elec. value / kWh | 1,43 | 1,43 | 1,43 | 1,43 | 1,43 | 1,43 | 1,40 | 1,30 | 0 |
| CHP operating load (kW) | 4 | 5 | 6 | 7 | 8 | 9 | 9 | 9 | 9 |
| CHP power prod./ kWh heat | 0,486 | 0,532 | 0,558 | 0,571 | 0,572 | 0,566 | 0,566 | 0,566 | 0,566 |
| CHP total cost / kWh heat | 1,14 | 1,11 | 1,08 | 1,05 | 1,02 | 0,99 | 0,99 | 0,99 | 0,99 |
| Savings / kWh heat with heat pump | 0,705 | 0,776 | 0,819 | 0,839 | 0,843 | 0,836 | 0,836 | 0,836 | |
| CHP net cost / kWh heat, with HP | 0,430 | 0,336 | 0,266 | 0,215 | 0,180 | 0,157 | 0,157 | 0,157 | |

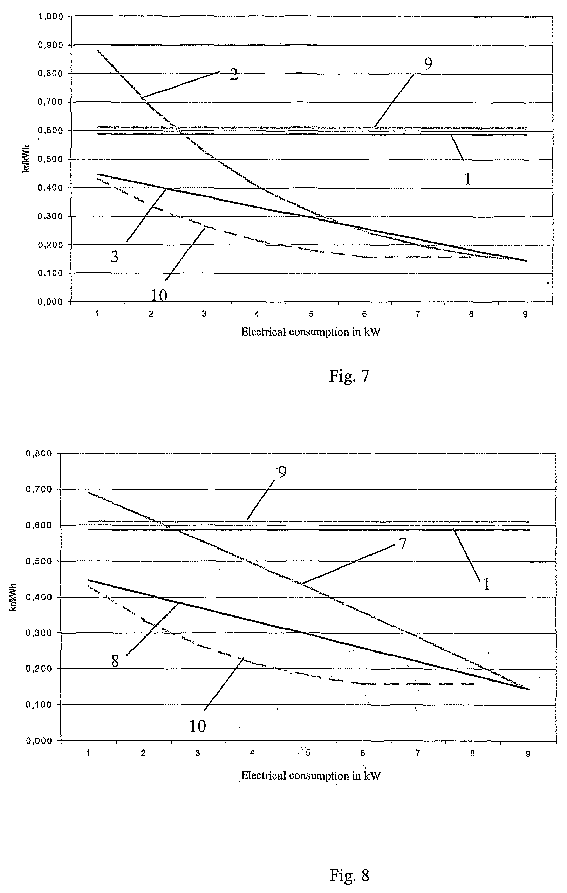

Figure 7 shows a plot of costs including the heat pump cost 9 and net cost 10 taken from Table 5. In this scenario the heat pump is more expensive than the boiler when powered by power from the network, and so boiler would be used preferentially to the heat pump in T1 warm operation. Thus the boiler cost determines the eco-points in T1 warm.

However, if the heat pump is powered by the CHP unit, then a lower cost of heat is attained. As noted above, such a mode of operation would usually only be useful in T1 cold. For comparison the costs for same system under T1 cold operation is shown in Figure 8, i.e. with the CHP unit operating at full load to maximise heat production.

As the heat price for heat produced at the heat pump varies with the network power price, rules for controlling the operation of the heat pump are determined based on the value of the power price for which the heat pump produces heat at the same price as the boiler. This is termed the critical power price for the heat pump, and is important in deciding whether or not to use the heat pump, and whether to power the heat pump with power from the network (a cost equivalent to the power price), or with surplus power from the CHP unit (as an alternative to selling this power back to the network).

When taking into account variation in the power prices there are three basic situations for the heat pump critical power price:

1. The critical power price for the heat pump is higher than power purchase price,
2. The critical power price for the heat pump is lower than power purchase price but higher than power sales price, and
3. The critical power price for the heat pump is lower than power sales price.

In the first instance heat pump operation will be cheaper than boiler operation, and this therefore leads to a new eco-point based on the heat pump price, as in Figure 6 for example. The heat pump will also be operated during T1 cold regardless of the simultaneous power consumption and regardless of possible simultaneous CHP operation, i.e. the heat pump rather than the boiler is used to provide heat to augment the heat output of the CHP unit when the heat demand exceeds CHP heat output during normal regulated operation. The CHP unit should of course be used to power the heat pump in preference to selling power to the network, and this is possible so long as the power demand from the installation is less than the CHP maximum power output.

The second situation leads to heat pump operation provided that the CHP also runs simultaneously and total power consumption (i.e. demand from the installation plus heat pump power consumption) is less that the maximum output of the CHP unit. Thus, the surplus power from the CHP unit can be used to run the heat pump, as the effective saving provided by this is based on 'selling' power to the heat pump at the critical power price, rather than selling power to the network at the actual selling price. If the total power consumption exceeds the CHP unit maximum power output, then as it will be necessary to buy some power from the network to power the heat pump it may be preferable to use the boiler instead of the heat pump. If the demand from the installation exceeds the CHP maximum output (i.e. if all the heat pump power has to be supplied from the network), then it will always be preferable to use the boiler.

In the final situation the heat pump is never used, as it will always be more effective to sell any surplus power from the CHP unit back to the network, and use the boiler to satisfy any heat demand that cannot be covered by the CHP unit.

**Claims**

1. A method of operating an apparatus for providing heat and power to an installation; the apparatus being operable in at least two heat production regimes and including a connection to an external electricity network, wherein at least one heat production regime results in the production or consumption of electricity;
whereby
the method comprises: determining a relationship (1, 2, 3, 4, 7, 8, 9, 10) between heat cost and electrical power demand from the installation for heat produced by each heat production regime taking into account a value of the electrical power produced or consumed, selecting the heat production regime that has the lowest heat cost for the current electrical power demand, and using this heat production regime to provide heat to the installation;
**characterised by**
taking account of the value of the electrical power produced or consumed consists of reducing the cost of heat when the heat producing regime also produces power and/or calculating the cost of heat based upon a cost of electrical power when the heat producing regime converts electrical power into heat.

2. A method as claimed in claim 1, wherein the heat production regimes comprise the use of different heat sources and/or, wherein the heat production regimes comprise different operating regimes of a single heat source.

3. A method as claimed in claim 1 or 2, wherein at least one of the heat producing regimes is heat provided by a combined heat and power (CHP) unit.

4. A method as claimed in claim 3, wherein a first CHP heat producing regime comprises operating the CHP unit under a regulated load to produce electrical power to meet the electrical power demand, and wherein a second CHP heat producing regime comprises operating the CHP unit at a load higher than the demand in order to meet the electrical power demand and selling surplus power to the network.

5. A method as claimed in claim 3, wherein a first CHP heat producing regime comprises operating the CHP unit under a regulated load to produce electrical power to meet the demand, a second CHP heat producing regime comprises operating the CHP unit at a load higher than the demand in order to meet demand and sell surplus power to the network and availability of these first and second regimes is determined based upon the heat demand of the installation, wherein if the heat demand of the installation exceeds the heat produced by the CHP unit at a regulated load, then the first CHP heat producing regime is not available, and the second CHP heat producing regime is utilised if the heat cost of this regime is the lowest heat cost of the available heat producing regimes.

6. A method as claimed in claim 5, wherein if the heat demand of the installation can be met by the CHP unit at a regulated load, then the second CHP heat producing regime is not available, and the first CHP heat producing regime is utilised if the heat cost of this regime is the lowest heat cost of the available heat producing regimes.

7. A method as claimed in any preceding claim, wherein a CHP unit and a heat pump provide heat producing regimes, the method comprising using electrical power from the CHP unit to power the heat pump.

8. An apparatus for providing heat and electrical power to an installation, the apparatus comprising: one or more heat sources operable in at least two heat production regimes, wherein at least one heat production regime produces or consumes electricity; a connection to an external electricity network; and a control device; wherein the control device is arranged to: determine a cost of heat produced by the heat production regimes taking into account a value of the electrical power produced or consumed; to select, for a given electrical power demand from the installation, the heat production regime that has the lowest heat cost; and to use this heat production regime to provide heat to the installation;
**characterised by**
taking account of the value of the electrical power produced or consumed consists of reducing the cost of heat when the heat producing regime also produces power and/or calculating the cost of heat based upon a cost of electrical power when the heat producing regime converts electrical power into heat.

9. An apparatus as claimed in claim 8, wherein the heat production regimes comprise different operating regimes of a single heat source.

10. An apparatus as claimed in any of claims 8 or 9, wherein one of said one or more heat sources is a combined heat and power (CHP) unit, which provides at least one of the heat producing regimes.

**11.** An apparatus as claimed in claim 10, wherein the CHP unit is arranged to operate in a first CHP heat producing regime using a regulated load to produce electrical power to meet the electrical power demand, and in a second CHP heat producing regime using a load higher than the demand in order to meet the electrical power demand and sell surplus power to the network, and the control device is arranged to determine availability of these first and second regimes based upon the heat demand of the installation, wherein if the heat demand of the installation exceeds the heat produced by the CHP unit at a regulated load, then the control device determines that the first CHP heat producing regime is not available, and the second CHP heat producing regime is utilised if the heat cost of this regime is the lowest heat cost of the available heat producing regimes.

**12.** An apparatus as claimed in claim 10 or 11, wherein if the heat demand of the installation can be met by the CHP unit at a regulated load, then the control device determines that the second CHP heat producing regime is not available, and the first CHP heat producing regime is utilised if the heat cost of this regime is the lowest heat cost of the available heat producing regimes.

**13.** An apparatus as claimed in any of claims 8 to 12, wherein the apparatus includes a CHP unit and a heat pump, each providing a heat producing regime, and wherein electrical power from the CHP unit powers the heat pump.

**Patentansprüche**

**1.** Verfahren zum Betreiben einer Vorrichtung zum Bereitstellen von Wärme und Strom an eine Anlage; wobei die Vorrichtung in mindestens zwei Wärmeerzeugungssystemen betriebsfähig ist und eine Verbindung zu einem externen Elektrizitätsnetz umfasst, wobei mindestens ein Wärmeerzeugungssystem in der Erzeugung oder dem Verbrauch von Strom resultiert;
wobei das Verfahren umfasst: Bestimmen einer Beziehung (1, 2, 3, 4, 7, 8, 9, 10) zwischen Heizkosten und elektrischem Strombedarf von der Anlage für Wärme, die durch jedes Wärmeerzeugungssystem erzeugt wird, unter Berücksichtigung eines Werts des Stroms, der erzeugt oder verbraucht wird, Auswählen des Wärmeerzeugungssystems, das die niedrigsten Heizkosten für den gegenwärtigen elektrischen Strombedarf aufweist, und Verwenden dieses Wärmeerzeugungssystems, um Wärme an die Anlage bereitzustellen;
**dadurch gekennzeichnet, dass** berücksichtigt wird, dass der Wert des Stroms, der erzeugt oder verbraucht wird, aus dem Reduzieren der Heizkosten besteht, wenn das Wärmeerzeugungssystem ebenfalls Strom erzeugt, und/oder die Heizkosten basierend auf Stromkosten berechnet werden, wenn das Wärmeerzeugungssystem Strom in Wärme umwandelt.

**2.** Verfahren nach Anspruch 1, wobei die Wärmeerzeugungssysteme das Verwenden von unterschiedlichen Wärmequellen umfassen und/oder, wobei die Wärmeerzeugungssysteme unterschiedliche Betriebssysteme einer einzelnen Wärmequelle umfassen.

**3.** Verfahren nach Anspruch 1 oder 2, wobei mindestens eines von den Wärmeerzeugungssystemen Wärme ist, die durch eine Kraft-Wärme-Kopplungs-(CHP) -Einheit bereitgestellt wird.

**4.** Verfahren nach Anspruch 3, wobei ein erstes CHP-Wärmeerzeugungssystem das Betreiben der CHP-Einheit unter einer regulierten Last umfasst, um Strom zu erzeugen und den elektrischen Strombedarf zu decken, und wobei ein zweites CHP-Wärmeerzeugungssystem das Betreiben der CHP-Einheit bei einer Last, die höher ist als die Anforderung, um den elektrischen Strombedarf zu decken, und das Verkaufen des überschüssigen Stroms an das Netzwerk umfasst.

**5.** Verfahren nach Anspruch 3, wobei ein erstes CHP-Wärmeerzeugungssystem das Betreiben der CHP-Einheit unter einer regulierten Last umfasst, um Strom zu erzeugen und den Bedarf zu decken, ein zweites CHP-Wärmeerzeugungssystem das Betreiben der CHP-Einheit bei einer Last umfasst, die höher ist als die Anforderung, um den Bedarf zu decken und überschüssigen Strom an das Netzwerk zu verkaufen, und die Verfügbarkeit dieser ersten und zweiten Systeme basierend auf dem Wärmebedarf der Anlage bestimmt wird, wobei, wenn der Wärmebedarf der Anlage die Wärme überschreitet, die von der CHP-Einheit bei einer regulierten Last erzeugt wird, das erste CHP-Wärmeerzeugungssystem dann nicht verfügbar ist, und das zweite CHP-Wärmeerzeugungssystem genutzt wird, wenn die Heizkosten dieses Systems die niedrigsten Heizkosten der verfügbaren Wärmeerzeugungssysteme sind.

**6.** Verfahren nach Anspruch 5, wobei, wenn der Wärmebedarf der Anlage von der CHP-Einheit bei einer regulierten Last gedeckt werden kann, das zweite CHP-Wärmeerzeugungssystem dann nicht verfügbar ist und das erste CHP-Wärmeerzeugungssystem genutzt wird, wenn die Heizkosten dieses Systems die niedrigsten Heizkosten der verfügbaren Wärmeerzeugungssysteme sind.

7. Verfahren nach einem vorstehenden Anspruch, wobei eine CHP-Einheit und eine Wärmepumpe Wärmeerzeugungssysteme bereitstellen, wobei das Verfahren das Verwenden von Strom von der CHP-Einheit umfasst, um die Wärmepumpe mit Strom zu versorgen.

8. Vorrichtung zum Bereitstellen von Wärme und Strom an eine Anlage, wobei die Vorrichtung umfasst: eine oder mehrere Wärmequellen, die in mindestens zwei Wärmeerzeugungssystemen betriebsfähig sind, wobei mindestens ein Wärmeerzeugungssystem Elektrizität erzeugt oder verbraucht; eine Verbindung zu einem externen Elektrizitätsnetz; und eine Steuervorrichtung; wobei die Steuervorrichtung ausgeführt ist: Heizkosten zu bestimmen, die durch die Wärmeerzeugungssysteme erzeugt werden, unter Berücksichtigung eines Werts des erzeugten oder verbrauchten Stroms; für einen gegebenen elektrischen Strombedarf von der Anlage das Wärmeerzeugungssystem auszuwählen, das die niedrigsten Heizkosten aufweist; und dieses Wärmeerzeugungssystem zu verwenden, um Wärme an die Anlage bereitzustellen;
   **dadurch gekennzeichnet, dass** berücksichtigt wird, dass der Wert des Stroms, der erzeugt oder verbraucht wird, aus dem Reduzieren der Heizkosten besteht, wenn das Wärmeerzeugungssystem ebenfalls Strom erzeugt, und/oder die Heizkosten basierend auf Stromkosten berechnet werden, wenn das Wärmeerzeugungssystem Strom in Wärme umwandelt.

9. Vorrichtung nach Anspruch 8, wobei die Wärmeerzeugungssysteme unterschiedliche Betriebssysteme einer einzelnen Wärmequelle umfassen.

10. Vorrichtung nach einem der Ansprüche 8 oder 9, wobei eine von der einen oder den mehreren Wärmequellen eine Kraft-Wärme-Kopplungs- (CHP) -Einheit ist, die mindestens eines von den Wärmeerzeugungssystemen bereitstellt.

11. Vorrichtung nach Anspruch 10, wobei die CHP-Einheit ausgeführt ist, in einem ersten CHP-Wärmeerzeugungssystem unter Verwendung einer regulierten Last zu arbeiten, um Strom zu erzeugen und den elektrischen Strombedarf zu decken, und in einem zweiten CHP-Wärmeerzeugungssystem unter Verwendung einer Last, die höher ist als der Bedarf zu arbeiten, um den elektrischen Strombedarf zu decken, und überschüssigen Strom an das Netzwerk zu verkaufen, und die Steuervorrichtung ausgeführt ist, die Verfügbarkeit dieser ersten und zweiten Systeme basierend auf dem Wärmebedarf der Anlage zu bestimmen, wobei, wenn der Wärmebedarf der Anlage die Wärme überschreitet, die von der CHP-Einheit bei einer regulierten Last erzeugt wird, die Steuervorrichtung dann bestimmt, dass das erste CHP-Wärmeerzeugungssystem nicht verfügbar ist und das zweite CHP-Wärmeerzeugungssystem genutzt wird, wenn die Heizkosten dieses Systems die niedrigsten Heizkosten der verfügbaren Wärmeerzeugungssysteme sind.

12. Vorrichtung nach Anspruch 10 oder 11, wobei, wenn der Wärmebedarf der Anlage von der CHP-Einheit bei einer regulierten Last gedeckt werden kann, die Steuervorrichtung dann bestimmt, dass das zweite CHP-Wärmeerzeugungssystem nicht verfügbar ist und das erste CHP-Wärmeerzeugungssystem genutzt wird, wenn die Heizkosten dieses Systems die niedrigsten Heizkosten der verfügbaren Wärmeerzeugungssysteme sind.

13. Vorrichtung nach einem der Ansprüche 8 bis 12, wobei die Vorrichtung eine CHP-Einheit und eine Wärmepumpe umfasst, die jeweils ein Wärmeerzeugungssystem bereitstellen, und wobei Strom von der CHP-Einheit die Wärmepumpe mit Strom versorgt.

**Revendications**

1. Procédé de fonctionnement d'un appareil pour fournir de la chaleur et de l'énergie à une installation ; l'appareil pouvant être exploité en au moins deux régimes de production de chaleur et comprenant une connexion avec un réseau d'électricité externe, dans lequel au moins un régime de production de chaleur entraîne la production ou la consommation d'électricité ;
   dans lequel le procédé comprend la détermination d'une relation (1, 2, 3, 4, 7, 8, 9, 10) entre le coût de la chaleur et la demande d'énergie électrique provenant de l'installation pour la chaleur produite par chaque régime de production de chaleur en tenant compte d'une valeur de l'énergie électrique produite ou consommée, la sélection d'un régime de production de chaleur qui a le coût de chaleur le plus bas pour la demande d'énergie électrique courante et l'utilisation de ce régime de production de chaleur pour fournir de la chaleur à l'installation ;
**caractérisé en ce que** la prise en compte de la valeur de l'énergie électrique produite ou consommée consiste à réduire le coût de la chaleur lorsque le régime de production de chaleur produit également de l'énergie et/ou à calculer le coût de la chaleur sur la base du coût de l'énergie électrique lorsque le régime de production de chaleur convertit l'énergie électrique en chaleur.

2. Procédé selon la revendication 1, dans lequel les régimes de production de chaleur comprennent l'utilisation de différentes sources de chaleur et/ou dans lequel les régimes de production de chaleur comprennent différents régimes d'exploitation d'une seule source de chaleur.

3. Procédé selon la revendication 1 ou 2, dans lequel au moins l'un des régimes de production de chaleur est de la chaleur fournie par une unité combinée de chaleur et d'énergie (CHP).

4. Procédé selon la revendication 3, dans lequel un premier régime de production de chaleur CHP comprend l'exploitation de l'unité CHP sous une charge régulée afin de produire de l'énergie électrique pour répondre à la demande d'énergie électrique et dans lequel un second régime de production de chaleur CHP comprend l'exploitation de l'unité CHP à une charge supérieure à la demande de manière à répondre à la demande d'énergie électrique et la vente du surplus d'énergie au réseau.

5. Procédé selon la revendication 3, dans lequel un premier régime de production de chaleur CHP comprend l'exploitation de l'unité CHP sous une charge régulée pour produire de l'énergie électrique afin de répondre à la demande, un second régime de production de chaleur CHP comprend l'exploitation de l'unité CHP à une charge supérieure à la demande afin de répondre à la demande et de vendre le surplus d'énergie au réseau et la disponibilité de ces premier et second régimes est déterminée sur la base de la demande en chaleur de l'installation, dans lequel, si la demande en chaleur de l'installation dépasse la chaleur produite par l'unité CHP à une charge régulée, le premier régime de production de chaleur CHP n'est pas disponible et le second régime de production de chaleur CHP est utilisé si le coût de la chaleur de ce régime est le coût de la chaleur le plus bas des régimes de production de chaleur disponibles.

6. Procédé selon la revendication 5, dans lequel, si la demande de chaleur de l'installation peut être satisfaite par l'unité CHP sous une charge régulée, le second régime de production de chaleur CHP n'est pas disponible et le premier régime de production de chaleur CHP est utilisé si le coût de la chaleur de ce régime est le coût de la chaleur le plus bas des régimes de production de chaleur disponibles.

7. Procédé selon l'une quelconque des revendications précédentes, dans lequel une unité CHP et une pompe à chaleur fournissent des régimes de production de chaleur, le procédé comprenant l'utilisation d'énergie électrique provenant de l'unité CHP pour alimenter la pompe à chaleur.

8. Appareil permettant de fournir de la chaleur et de l'énergie électrique à une installation, l'appareil comprenant une ou plusieurs sources de chaleur exploitables dans au moins deux régimes de production de chaleur, dans lequel au moins un régime de production de chaleur produit ou consomme de l'électricité ; une connexion avec un réseau d'électricité externe ; et un dispositif de commande ; dans lequel le dispositif de commande est aménagé pour déterminer un coût de la chaleur produite par les régimes de production de chaleur en tenant compte d'une valeur de l'énergie électrique produite ou consommée ; choisir pour une demande d'énergie électrique donnée venant de l'installation, le régime de production de chaleur qui a le coût de la chaleur le plus bas ; et utiliser le régime de production de chaleur pour fournir de la chaleur à l'installation ; **caractérisé en ce que** :

la prise en compte de la valeur de l'énergie électrique produite ou consommée consiste à réduire le coût de la chaleur lorsque le régime de production de chaleur produit également de l'énergie et/ou calculer le coût de la chaleur sur la base d'un coût de l'énergie électrique lorsque le régime de production de chaleur convertit l'énergie électrique en chaleur.

9. Appareil selon la revendication 8, dans lequel les régimes de production de chaleur comprennent différents régimes d'exploitation d'une seule source de chaleur.

10. Appareil selon l'une quelconque des revendications 8 ou 9, dans lequel l'une desdites une ou plusieurs sources de chaleur est une unité de chaleur et d'énergie combinée (CHP) qui fournit au moins l'un des régimes de production de chaleur.

**11.** Appareil selon la revendication 10, dans lequel l'unité CHP est aménagée pour opérer dans un premier régime de production de chaleur CHP en utilisant une charge régulée afin de produire de l'énergie électrique pour répondre à la demande d'énergie électrique et, dans un second régime de production de chaleur CHP, en utilisant une charge supérieure à la demande pour répondre à la demande d'énergie électrique et vendre le surplus d'énergie au réseau, et le dispositif de commande est aménagé pour déterminer la disponibilité de ces premier et second régimes sur la base de la demande de chaleur de l'installation, dans lequel, si la demande de chaleur de l'installation dépasse la chaleur produite par l'unité CHP sous une charge régulée, le dispositif de commande détermine que le premier régime de production de chaleur CHP n'est pas disponible et le second régime de production de chaleur CHP est utilisé si le coût de la chaleur de ce régime est le coût de la chaleur le plus bas des régimes de production de chaleur disponibles.

**12.** Appareil selon la revendication 10 ou 11, dans lequel, si la demande de chaleur de l'installation peut être satisfaite par l'unité CHP sous une charge régulée, le dispositif de commande détermine que le second régime de production de chaleur CHP n'est pas disponible et le premier régime de production de chaleur CHP est utilisé si le coût de la chaleur de ce régime est le coût de la chaleur le plus bas des régimes de production de chaleur disponibles.

**13.** Appareil selon l'une quelconque des revendications 8 à 12, dans lequel l'appareil comprend une unité CHP et une pompe à chaleur, chacune fournissant un régime de production de chaleur, et dans lequel l'énergie électrique provenant de l'unité CHP alimente la pompe à chaleur.

Fig. 1

Fig. 2

Electrical consumption in kW

Fig. 3

Electrical consumption in kW

Fig. 4

20

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2402001 A